# EUROPEAN PATENT APPLICATION

(11) **EP 4 818 935 A1**
(43) Date of publication of application: **07.10.2026**
(21) Application number: 26168251.2
(22) Date of filing: 26.03.2026
(51) Int. Cl.: G06F 21/32, H04L 9/32, H04L 9/40

(54) **A METHOD AND AN ASSET CONTROLLER TO ACCESS AN ASSET**

(30) Priority: 30.03.2025 IN 202541031274
(71) Applicant: TVS Motor Company Limited, 600006 Chennai (IN)
(72) Inventor: Naresh, Adepu, 600006 Chennai (IN); Narra, Anitha, 600006 Chennai (IN); Rajan, Sippy, 600006 Chennai (IN); Jinu, P Raj, 600006 Chennai (IN); Gollapalli, Chandra Kiran, 600006 Chennai (IN); Parag, Ashok Inamdar, 600006 Chennai (IN)
(74) Representative: Patentanwaltskanzlei Matschnig & Forsthuber OG

(57) **Abstract**

The subject matter discloses a method 200, 300, 400 and a device 102 for providing access to an asset 104. The method 300 comprises receiving an access request from a user device wherein the access request comprises a digital signature encrypted with a private key. The method 300 comprises verifying the digital signature using a public key stored in a blockchain, sending a request to a smart contract on the blockchain to verify the access request of the user device on successful verification of the digital signature, receiving a verification result from the smart contract. The method 300 comprises providing the access to the asset if the verification result indicates that the access request meets the conditions in the smart contract, and denying the access to the asset if the verification result indicates that the access request does not meet the conditions in the smart contract.

## Description

### TECHNICAL FIELD

The claimed subject matter in general relates to providing access to assets. The claimed subject matter in particular relates to providing secure access to different assets using injection of noise in the user data sent to the asset.

### BACKGROUND

Presently, the accessibility to different assets are provided in different ways. Traditional access systems rely on physical keys, RFID cards, or digital key fobs, a mobile phone etc. which pose several security and operational challenges. The assets could be a vehicle, a server computer, a laboratory, hospital equipments, high security establishments etc. A vehicle may be a significant asset and needs secure access.

Traditional vehicle access systems rely on biometrics, key fobs, or passcodes, which can be stolen, cloned, or replicated by attackers, leading to unauthorized access.

Attackers can capture authentication signals during transmission and replay them later to gain unauthorized access, exploiting weaknesses in conventional security protocols.

Biometric data, such as fingerprints and facial recognition, can be copied from publicly available sources, and digital keys can be duplicated, making conventional authentication methods susceptible to hacking.

Slight changes in user inputs, such as partial fingerprint scans or slightly mistyped passcodes, can result in legitimate users being denied access, causing inconvenience.

Attackers use automated tools to systematically guess passwords, encryption keys, or biometric data, potentially bypassing access control systems through trial and error.

If the communication between the authentication device and the vehicle is intercepted, hackers can modify the transmitted data to gain unauthorized access or bypass security checks.

Conventional authentication systems are often static, making them ineffective against emerging hacking techniques and security vulnerabilities that evolve over time.

In the digital age of providing security digitally, the security may be compromised by unauthorized persons in many ways. For example, if the asset is especially a vehicle, the signals from the key fob may be recorded and played back later by unauthorized people to gain unauthorized access. The biometric data may be accessed from different sources and may be used to gain unauthorized access. The pre-stored user data/profiles in the vehicle controller may be tampered remotely to create new user data/profile to gain unauthorized access. Also the sharing of key-fobs with different users may have challenges of somebody making duplicate key-fobs and using them later for unauthorized access. Hence there is a need to provide methods to assign access which is not prone to manipulations.

Some prior arts use above mentioned techniques and have the above mentioned challenges.

Therefore, there is a clear and pressing need to address the above-mentioned multifaceted challenges associated with security of accessing the assets. Existing technologies have made attempts to tackle these issues but often fall short in providing a comprehensive solution that balances security and reliability. The shortcomings of existing techniques, particularly with respect to false alarms, vulnerabilities to hacking, and the potential for bypassing security mechanisms, must be addressed to ensure that the assets remain secure in an increasingly complex environment.

The claimed subject matter addresses the above discussed issues.

### SUMMARY

The claimed subject matter is defined in the independent claims. Further details are defined in the dependent claims.

The subject matter discloses a system, a device and a method for providing access to an asset. The assets could be a vehicle, a server computer, a laboratory, hospital equipments, high security establishments etc. In the detailed description, vehicle is mentioned as asset more often only as an example, however the claimed subject matter is applicable to any asset which may need to provide controlled and different accesses for different users.

The subject matter discloses a method of generating an access request, the method performed by a user device. The method comprises receiving a user data, manipulating the user data by injecting a noise in the user data and sending the manipulated user data to an asset controller in an asset. The method further comprises receiving at least one of a biometric data and a password as part of user data. The method further comprises receiving at least one of a finger print data, a facial image and a voice command as part of biometric data. The method further comprises injecting a different noise every time from a group of noise pre-stored in a memory, to eliminate the possibility of someone capturing the transmitted manipulated user data to replay later.

The subject matter discloses a method of providing access to an asset, the method performed by an access controller in the asset. The method comprises receiving an access request from a user device, the access request comprising manipulated user data, filtering injected noise from the manipulated user data to get original user data, comparing the original user data with pre-stored user data and providing access to the asset, if the original user data matches with at least one pre-stored user data within a pre-defined tolerance.

The method further comprises comparing the received manipulated user data with last received manipulated user data and filtering the injected noise from the manipulated user data to get original user data, if the presently received manipulated user data is different from last received manipulated user data. This to eliminate the possibility of someone capturing the previously transmitted manipulated user data to replay later.

The method further discloses denying the access to the asset if the original user data fails to match with at least one pre-stored user data within a pre-defined tolerance.

The method further discloses providing the access to the asset by unlocking the vehicle if the asset is a vehicle.

The method further discloses unlocking the vehicle through input output interfaces, as part of providing access to the asset.

The method further discloses activating an ignition unit in the vehicle if the asset is a vehicle, as part of providing access to the asset.

The method further discloses providing access rights to the identified folders, identified data bases and identified confidential information, if the asset is a computer server.

Especially when the asset is a vehicle, where typically key fobs are used for accessing the vehicle, the system provides an enhanced level of secure transmission of user identification by manipulating user data. In an embodiment, it is ensured that the presently transmitted manipulated data is not same as the manipulated data transmitted in the past. This is to ensure that the attackers do no not record the signal from the key-fobs and replay it later to gain unauthorized access to the vehicle.

### BRIEF DESCRIPTION OF THE DRAWINGS

The detailed description is described with reference to the accompanying figures. In the figures, similar reference numerals are used throughout the drawings to reference like features and components.
Figure 1A illustrates a system for providing access to an asset, where asset is a vehicle
Figure 1B illustrates a device for providing access to an asset, where asset is a server computer
Figure 2 illustrate a method of generating an access request
Figure 3 illustrate a method of providing access to an asset

### DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may refer to a two wheeled motor vehicle, a three wheeled motor vehicle or a car or any passenger motor vehicle or goods carrying motor vehicle. The term 'coupled' is used to indicate coupling between different elements, it may mean directly coupled or indirectly coupled through additional elements. The terms 'module' and 'component' may be used interchangeably. The term 'access to vehicle' or 'access' refers to 'opening a door of a vehicle', or 'unlocking a handle lock of a two wheeled motor vehicle'.

Only the details/components required to describe the claimed subject matter in specific, are disclosed in this document. The details/components which are commonly known or understood by people skilled in the art may not be covered in this document.

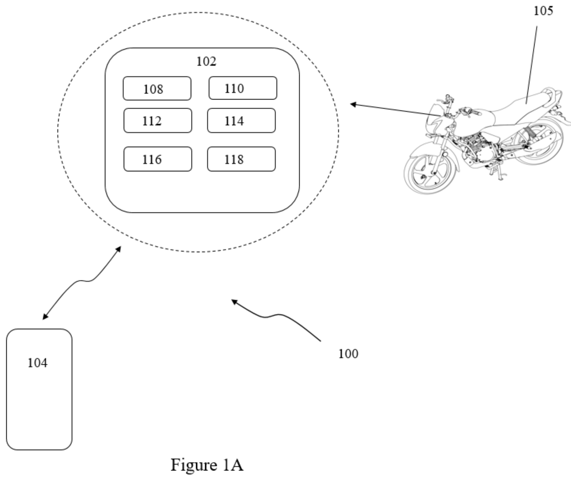

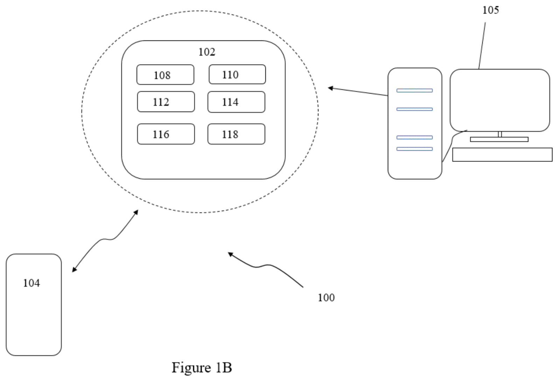

Figure 1A and Figure 1B disclose a system 100 for providing access to an asset. The system 100 comprises an access controller 102 in an asset 105, and a user device104. The access controller 102 is referred as controller 102. In figure 1A the asset shown as a vehicle 105 as an example. In figure 1B the asset shown as a server computer 105 as an example. The communication between the asset controller 102 and the user device 104 may be a Bluetooth, Near Field Communication or any kind of wireless communication. The user device 104 may be a mobile phone or any other communication device.

The access controller 102 comprises a processor 108, a memory 119 coupled to the processor 108, input output interfaces 112. In an embodiment the device 102 comprises a communication unit 114. In an embodiment the communication unit 114 may be external to the controller 102. In an embodiment the communication unit 114 may comprise a GSM module. The communication unit 114 handles the transmission and reception of data to and from the user device 104. The communication unit 114 comprises a transmitter module to transmit data and a receiver module to receive data. The transmitter module and the receiver module may be combined into one as a transceiver. The asset controller 102 comprises a verification module 116 and an access providing module 118. The transmitter module, the receiver module, may be implemented using hardware circuits, input output ports, firmware etc. The input output interfaces 112 may comprise input ports, output ports, cabling to control mechanical components to operate a lock of a vehicle 105.

When the user wants to access the asset 105, the user opens an application on the user device 104 and provides a user identification. The user identification may be a biometric data or a password. The biometric data may comprise at least one of a finger print data, a facial image, a voice command etc. The biometric data and/or the password is referred as user data. The user data is injected with a noise. Injection of noise comprises manipulating a small portion of user data with a noise data. In an embodiment, each time a different noise data is selected for injection, to eliminate the possibility of attackers capturing the noise injected user data and replaying it in next possible chance for unauthorized access of the asset 105.

The user data before the injection of noise is referred as original user data. The user data which is injected with noise is referred as manipulated user data hence forth. The manipulated user data is sent to the controller 102 in the asset 105 by the user device 104. In an embodiment, the manipulated user data may be encrypted to enhance security.

The receiver module in the asset controller 102 receives the manipulated user data. The verification module 116 filters the injected noise from the manipulated user data to get the original user data. The verification module 1116 compares the original user data with a set of pre-stored user data. If the difference between the original user data and at least one pre-stored user data is within a pre-defined tolerance, the verification is a success. Otherwise the verification is a failure. If the verification is a failure, the access is denied. The pre-defined tolerance may be set through hardware or firmware in the asset controller 102. If the manipulated user data was encrypted, the verification module 116 decrypts it before filtering. The pre-defined tolerance indicates the acceptable difference between the original user data and the matched pre-stored data for providing access to the asset 105.

The asset controller 102 applies AI-based algorithms and machine learning models to distinguish the injected noise from the original user data, ensuring accurate user data verification while maintaining security.

The pre-stored user data in the asset controller 102 comprises biometric data and/or passwords of different users. The biometric data may comprise finger print data, facial images, voice commands etc.

The pre-stored user data in the asset controller 102 is stored using a diagnostic tool or using any other downloading tools.

In an embodiment, the presently received manipulated user data is compared with the last received manipulated user data and the filtering is performed only when both are different. This is to eliminate the possibility of attackers capturing the manipulated user data and replaying it in next possible chance for unauthorized access of the asset 105.

Once the verification is a success, access is provided to the asset 105 through the access providing module 118. Providing access to the asset 105, if the asset is a vehicle, comprises unlocking the vehicle. In an embodiment the ignition unit in the vehicle is activated as part of providing access to the vehicle 105. Unlocking the vehicle 105 may comprise unlocking the door of a vehicle or unlocking the handle lock if the vehicle is a two wheeler. Unlocking of the door or unlocking of the handle lock may be performed by electro-mechanical components like a solenoid, a lever, a cable etc. Activation of the ignition unit may be performed by connecting the ignition unit to a battery in the vehicle using an electronic switch. Providing access to the asset 105 is performed by access providing module 118 using the input output interfaces 112 and the electro-mechanical components.

If the asset 105 is a server computer, for example, the access may be given to identified folders, data bases, confidential information etc.

The user data also may represent what kind of limitations are assigned while providing access to the asset 105. For example, for a vehicle, some users may have no limitation. However, some users may have some limitations like maximum speed of the vehicle, maximum range of the vehicle, duration of use etc. These limitations may be implemented by engine control units in the vehicle in communication with asset controller 102.

If the asset 105 is a computer server, limitations may be on selected folders, files, confidential information etc.

The details of the access are logged into a report in the access controller 102. The report may comprise, the date and time of access, duration of access, user identification, the reason for failure if any, no. of attempts from the same user device etc.

When the asset is a vehicle, the functionalities of the asset controller 102 may be implemented in one of the electronic control units, ECUs, in the vehicle 105. In an embodiment, the functionalities of the asset controller 102 may be implemented in the engine control unit of the vehicle 105. In an embodiment the asset controller 102 may be a stand-alone unit and may communicate with other ECUs in the vehicle 105 using standard communication protocols to provide access to the vehicle 105. Providing access to the vehicle like unlocking the vehicle, activating the ignition unit, may be performed by the asset controller 102 using the input output interfaces 112 and the electro-mechanical components or may perform using other ECUs like vehicle body computer, engine control unit etc. in the vehicle.

The processors 104 may comprise one or more of central processing units (CPU), digital signal processors (DSP), application specific integrated circuits (ASIC), a controller, field programmable gate arrays (FPGA), or any other hardware device, a firmware device, or any combination of these. The processor 104 is configured using control registers, input output ports, firmware, input output interfaces etc. to perform the operations described herein.

In an embodiment, the memory 106 may comprise one or more volatile and non-volatile memory components which are capable of storing data and instructions to be executed.

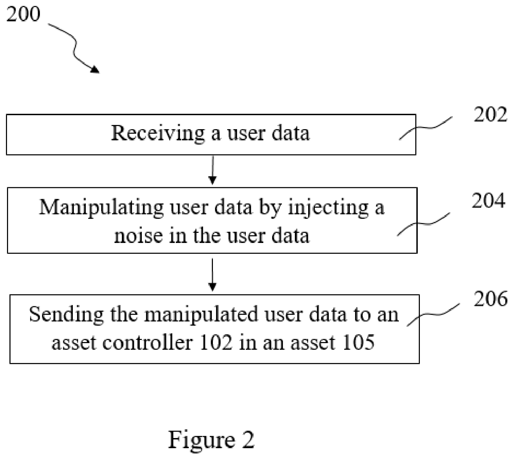

Figure 2 illustrates a method 200 for generating an access request. The method is performed by the user device 104. Step 202 discloses receiving a user data. Step 204 discloses manipulating the user data by injecting a noise in the user data. Step 206 discloses sending the manipulated user data to an asset controller 102 in an asset 105.

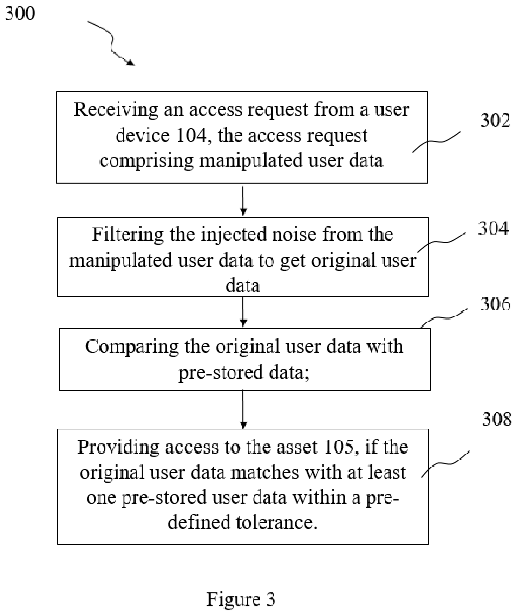

Figure 3 illustrates a method 300 for providing access to an asset 105. The method 300 is performed by the asset controller 102. Step 302 discloses receiving an access request from a user device 104, the access request comprising manipulated user data. Step 304 discloses filtering injected noise from the manipulated user data to get original user data. Step 306 discloses comparing the original user data with pre-stored user data. Step 308 discloses providing access to the asset 105, if the original user data matches with at least one pre-stored user data within a pre-defined tolerance.

The subject matter provides enhanced security by an additional layer of noise injection into the user data, such as slight modifications in biometric features, cryptographic salting of passwords, or random perturbations in digital key sequences.

The disclosed subject matter has the following technical advantages.

The system 100 collects user data from various sources such as biometric scanners like finger prints, facial recognition, voice commands, and digital key fobs, mobile NFC/Bluetooth authentication, or manually entered passwords.

The subject matter provides enhanced security by an additional layer of noise injection into the user data, such as slight modifications in biometric features, cryptographic salting of passwords, or random perturbations in digital key sequences.

The manipulated user data is encrypted and sent through a secure communication channel to the asset controller 102 to prevent interception or tampering.

The asset controller 102 applies AI-based algorithms and machine learning models to distinguish the injected noise from the original user data, ensuring accurate user data verification while maintaining security.

The filtered user data is matched against pre-stored user data to determine if the access request is from an authorized user.

If the verification is successful within a pre-defined tolerance, access is provided to the asset.

### LIST OF REFERENCE NUMERALS

- 100: System to access a vehicle
- 102: Access controller
- 104: User device
- 105: Asset
- 108: Processor
- 110: Memory
- 112: Input Output interfaces
- 114: Communication unit
- 116: Verification module
- 118: Access providing module

## Claims

1. A method (200) of generating an access request, the method (200) performed by a user device (104), the method (200) comprising:
receiving (202) a user data;
manipulating (204) the user data by injecting a noise in the user data; and
sending (206) the manipulated user data to an asset controller (102) in an asset (105).

2. The method (200) as claimed in claim 1, wherein receiving the user data comprises receiving at least one of a biometric data and a password.

3. The method (200) as claimed in claim 2, wherein receiving the biometric data comprises receiving at least one of a finger print data, a facial image and a voice command.

4. The method (200) as claimed in claim 1, wherein injecting the noise in the user data comprises injecting a different noise every time from a group of noise pre-stored in a memory (110).

5. A method (300) of providing access to an asset (105), the method performed by an access controller (102) in the asset (105), the method (300) comprising:
receiving (302) an access request from a user device (104), the access request comprising manipulated user data;
filtering (304) injected noise from the manipulated user data to get original user data;
comparing (306) the original user data with pre-stored user data; and
providing (308) access to the asset (105), if the original user data matches with at least one pre-stored user data within a pre-defined tolerance.

6. The method (300) as claimed in claim 5 wherein filtering the injected noise from the manipulated user data to get original user data comprises:
comparing the received manipulated user data with last received manipulated user data; and
filtering the injected noise from the manipulated user data to get original user data, if the presently received manipulated user data is different from last received manipulated user data.

7. The method (300) as claimed in claim 5 comprising denying the access to the asset (105) if the original user data fails to match with at least one pre-stored user data within a pre-defined tolerance.

8. The method (300) as claimed in claim 5 wherein providing the access to the asset (105) comprises unlocking the vehicle (105) if the asset is a vehicle (105).

9. The method (300) as claimed in claim 8 wherein unlocking the vehicle (105) comprises unlocking the vehicle (105) using input output interfaces (112).

10. The method (300) as claimed in claim 5 wherein providing the access to the asset (105) comprises activating an ignition unit in the vehicle (105) if the asset is a vehicle (105).

11. The method (300) as claimed in claim 5 wherein providing the access to the asset (105) comprises providing access rights to the identified folders, identified data bases and identified confidential information, if the asset (105) is a computer server (105)

12. An access controller (102) in an asset, the asset controller comprising:
a processor (108);
a memory (110) coupled to the processor (108);
the processor (108) configured to
receive an access request from a user device (104), the access request comprising manipulated user data;
filter the injected noise from the manipulated user data to get original user data;
compare the original user data with pre-stored user data; and
provide access to the asset (105), if the original user data matches with at least one pre-stored user data within a pre-defined tolerance.

13. The access controller (102) as claimed in claim 12, the asset controller (102) comprising:
input output interfaces (112) connected to electro-mechanical components to perform at least one of:
unlocking a vehicle (105) when the asset is a vehicle (105); and
activating an ignition unit in the asset (105) if the asset (105) is a vehicle (105).

14. The access controller (102) as claimed in claim 13, is implemented in an Engine Control Unit, ECU, in the vehicle (105)

15. The access controller (102) as claimed in claim 13, the asset controller (102) is an ECU.
